# EUROPEAN PATENT APPLICATION

(11) **EP 1 912 004 A2**
(43) Date of publication of application: **16.04.2008**
(21) Application number: 06807887.2
(22) Date of filing: 27.07.2006
(51) Int. Cl.: F16L 11/04, A01N 25/00, H02G 1/00

(54) **METHOD OF PRODUCING PROTECTIVE CABLE SHEATHS, TUBES AND SIMILAR**

(30) Priority: 29.07.2005 ES 200501940
(71) Applicant: RELATS, S.A., 08140 Caldes De Montbui (Barcelona) (ES)
(72) Inventor: RELATS MANENT, JORDI, 08140 CALDES DE MONTBUI (Barcelona) (ES); RELATS CASAS, PERE, 08140 CALDES DE MONTBUI (Barcelona) (ES); ARTOLA SOLE, DOLORS, 08140 CALDES DE MONTBUI (Barcelona (ES); FRUNS MARTIN, ANNA, DE MONTBUI (Barcelona (ES)
(74) Representative: Maldonado Jordan, Julia
(86) International application number: PCT/ES2006/000439
(87) International publication number: WO 2007/014969

(57) **Abstract**

The invention relates to a method of producing protective cable sheaths, tubes and similar. The inventive method consists in incorporating a rodent repellent (1a, 1b, 1c) into the composition of one of the materials (2a, 2b, 2c) used to form one of the constituent elements (3) of the sheath (4), said repellent (1a, 1b, 1c) thereby being incorporated into the sheath (4).

## Description

### Aim of the Invention

The invention relates to a method of producing cable sheaths, tubes and similar.

### Background to the invention

At the present time, in some sectors, such as the automotive industry, it is common to sheath bundles of cables or tubes in order to keep them together and to provide them with some additional mechanical protection against chaffing, or against external agents that could damage them, such as heat sources.

In this sense, it is normal in the electrical installation of a vehicle the cables to be placed inside a flexible cover that prevents chaffing against the metal parts and/or cuts of the bodywork, preventing the risk of short circuits from the wear and tear of the insulating material that covers them and from vibrations, in addition to make the factory fitting easier.

In certain cases a protective sheath is placed around the tubes and cables that are exposed to bad weather, protecting them from solar radiation and water.

However, in some cases these cables are attacked by rodents and certain animals that bite the protective sheath, leaving the conductor core open and being able to cause a short circuit or even a small fire. In this case the sheaths only slow down the appearance of the problems, because they are also attacked in the same way by the rodents.

Some of these sheaths are described in the utility models U200103125, U200103124, 200103122 and patent 232.805 of the same applicant as this present invention.

In the utility model U200103125 a sheath or tube is described for the protection of cables that is made up of a plurality of glass fibre woven threads and a polyurethane covering that makes them temperature resistant.

In utility model U200103124 a sheath or tube is described for the protection of cables that is made up of a plurality of threads making the tube with a covering of a silicone emulsion that is applied in a liquid or paste manner for subsequent curing.

In utility model U200103122 a sheath or tube is described for the protection of cables that is made up of a plurality of woven polyester threads with a reinforcing cover. Said polyester threads or filaments also even being made with no treatment.

Rodent repelling products are applied to these sheaths or tubes by means of spraying or impregnating the external surface of the sheath or cable. These repellents give off smells that are unpleasant for the rodents or give off unpleasant tastes that reduce the risk of the animals chewing them, at least in a repetitive manner. However, this means of application, by spraying, the repellent product offers a limited persistence, as the environmental agents such as solar radiation, heat and rainwater given off in a certain short period of time leave the material without any protection.

### Description of the invention

The method for the manufacture of producing cable sheaths, tubes and similar of this invention has a series of technical peculiarities that provide on-going persistence for the product throughout the useful working life of the sheath, greater resistance to the attack of rodents and greater ease of application.

The manufacturing method includes the incorporation of a rodent repellent product in the composition of one of the materials with which one of the constitutive elements of the sheath is made, said repellent product being incorporated into the composition of said material.

The repellent product on being incorporated into the composition of one of the materials destined to make up the sheath; the repellent is not affected by wear and tear, solar radiation, rain or other external agents, thus guaranteeing its permanence throughout the useful working life of the protective sheath.

As these sheaths can be made with different materials or raw materials, the incorporation of the repellent into the composition of said materials will be carried out in each case in the most suitable manner, being foreseen that said repellent product is added in the form of pellets to the polyester siftings or such other thermoplastic material prior to the formation of the thread or filament that is used for the formation of the weave, that the repellent product is added in the form of powder when it is to be added to the liquid or paste polyurethane, prior to its polymerisation, or that it is added in a liquid state when a silicone paste is required prior to the curing of said silicone.

Once the sheath is formed, the element shaped with the material that includes the repellent in its composition, exercises a repellent effect inasmuch as when the rodent approaches or bites the sheath and it notes an unpleasant taste or smell.

### A description of the drawings

In order to complement the description that is being carried out and for the purpose of making the characteristics of the invention easier to understand, this present description is accompanied by a set of drawings that are by way of illustration but without being in any way limiting, in which the following has been represented:

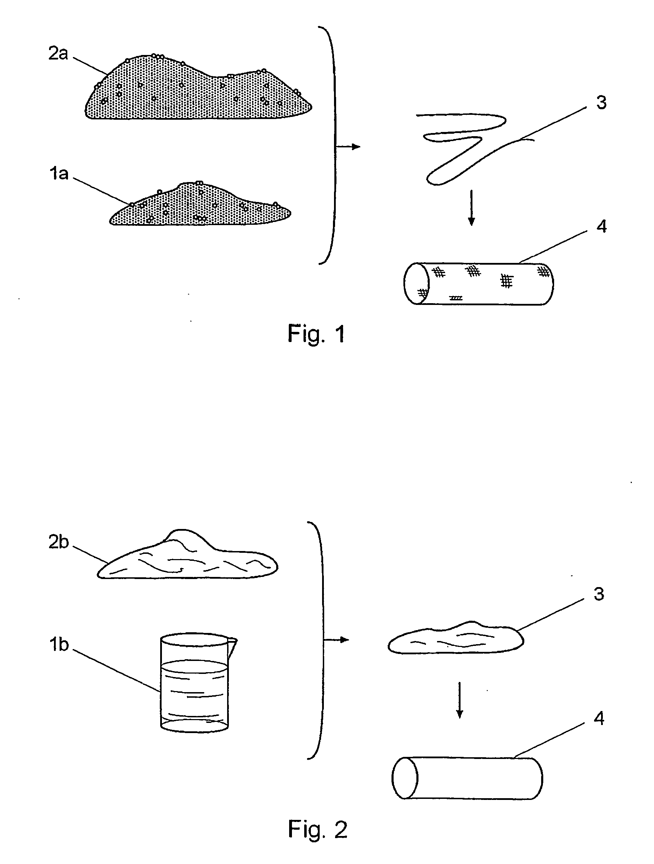

Figure 1 shows a scheme for the manufacturing method of a sheath that incorporates polyester threads and in which the repellent, in the form of pellets, is added to the polyester siftings with which said threads are formed.
Figure 2 shows a scheme for the manufacturing method of a sheath that incorporates silicone, carried out with the addition of the repellent to the silicone in a liquid or paste state, prior to the curing.

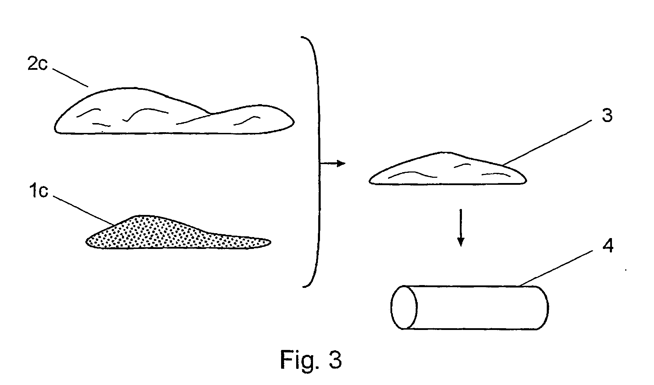

Figure 3 shows a scheme for the manufacturing method of a sheath that incorporates polyurethane, carried out with the addition of the repellent to the polyurethane while still in a liquid or paste state, in the form of powder.

### Preferred embodiment of the invention

As can be seen from the referred to figures the method for the manufacture includes the incorporation of a repellent product (1a, 1b, 1c) into the composition of some of the materials (2a, 2b 2c) with which some of the constitutive elements (3) of the sheath (4) is formed, said incorporation being carried out prior to the making up of said element and without altering its structure.

In the case in which the sheath (4) includes polyester threads (3), the rodent repellent product (1a) is added in the form of pellets, to the polyester siftings or material (2a) prior to the forming of the polyester thread (3), the repellent product being incorporated into the polyester threads (3).

In the case in which the sheath (4) includes glass and polyurethane fibre (2c) the repellent product (1c) is added in powder form to the liquid or paste polyurethane prior to its application and polymerisation or curing.

In the case in which the sheath (4) includes silicone (2b) the repellent product (1b) is added in liquid form to the silicone or silicones used when it is also in the liquid state, prior to curing.

A suitable product for said purposes is the one marketed by the company C-tech Corporation under the name of RODREPEL ©. This product can be added to the composition of one of the materials at a point of its manufacture, prior to the preparation of the element, either in the form of pellets, powder or liquid.

Once having sufficiently described the nature of the invention likewise an example of a preferred embodiment it is placed on record to whom it may concern that the materials, shape, size and arrangement of the elements described can be appropriately modified and do not stray away from the essential nature of the invention that are claimed below.

## Claims

1. A method for the manufacture of cable sheaths, tubes and similar, **characterised in that** it includes the incorporation of a rodent repellent product (1a, 1b, 1c) into the composition of some of the materials (2a, 2b 2c) with which some of the constitutive elements (3) of the sheath (4) is formed, said repellent product (1a, 1b, 1c) being incorporated internally into the sheath (4).

2. A method, according to claim 1, **characterised in that** the repellent product (1a) in the form of pellets is added to the polyester or other thermoplastic material siftings (2a) prior to the formation of the thread or filament that is used as an element (3) for the make up of the sheath (4).

3. A method, according to claim 1, **characterised in that** the repellent product (1c) in the form of powder is added to the polyurethane liquid or paste material (2c) prior to its application or curing, when the sheath (4) is made from glass fibre and polyurethane elements (3).

4. A method, according to claim 1, **characterised in that** the repellent product (1b) in the form of liquid is added to the liquid or paste silicone or silicone material (2b) prior to the curing, that is used for the make up of the sheath (4).
